# EUROPÄISCHE PATENTSCHRIFT

(11) **EP 3 094 940 B1**
(45) Veröffentlichungstag und Bekanntmachung des Hinweises auf die Patenterteilung: **27.12.2017**
(21) Anmeldenummer: 15700559.6
(22) Anmeldetag: 13.01.2015
(51) Int. Cl.: F28D 21/00, F24F 3/147, F24F 12/00

(54) **VERFAHREN UND VORRICHTUNG ZUR GLEICHZEITIGEN ÜBERTRAGUNG VON WÄRME UND FEUCHTE ZWISCHEN WENIGSTENS ZWEI UNTERSCHIEDLICHEN GASSTRÖMEN**
METHOD AND DEVICE FOR THE CONCURRENT TRANSFER OF HEAT AND MOISTURE BETWEEN AT LEAST TWO DIFFERENT GAS STREAMS
PROCÉDÉ ET DISPOSITIF POUR LA TRANSMISSION SIMULTANÉE DE CHALEUR ET D'HUMIDITÉ ENTRE AU MOINS DEUX COURANTS GAZEUX DIFFÉRENTS

(30) Priorität: 13.01.2014 DE 102014000135
(43) Veröffentlichungstag der Anmeldung: 23.11.2016
(73) Patentinhaber: Zeidler, Bernd, 45966 Gladbeck (DE)
(72) Erfinder: Zeidler, Bernd, 45966 Gladbeck (DE)
(74) Vertreter: Nunnenkamp, Jörg
(86) Internationale Anmeldenummer: PCT/EP2015/050493
(87) Internationale Veröffentlichungsnummer: WO 2015/104426

(56) Entgegenhaltungen:
- EP-A1- 0 012 491
- EP-A1- 2 026 029
- EP-A2- 1 312 870
- GB-A- 2 417 315

## Beschreibung

Die Erfindung betrifft ein Verfahren und eine Vorrichtung zur gleichzeitigen Übertragung von Wärme und Feuchte zwischen wenigstens zwei unterschiedlichen Gasströmen, wobei die beiden Gasströme über wenigstens eine textile Austauschfläche miteinander kommunizieren, und wobei die in dem einen Gasstrom befindliche Feuchte dem Feuchtegradient folgend auf den anderen Gasstrom übertragen wird und dazu die textile Austauschfläche einen flächigen Träger aufweist, welcher mit einem wasserbindenden Füllstoff beschichtet wird.

Die beiden Gasströme sind regelmäßig dahingehend unterschiedlich gestaltet, dass sie eine verschiedene Temperatur und/oder einen unterschiedlichen Feuchtegehalt aufweisen. Beispielsweise geht es im Stand der Technik nach der DE 10 2009 000 617 A1 um eine Einrichtung zum Entfeuchten, Erwärmen und/oder Kühlen eines Fluids, welche mit einer textilen Bahn als Austauschfläche ausgerüstet ist, entlang welcher ein Strom einer Flüssigkeit verläuft. Außerdem wird die textile Bahn mit einem Strom eines Gases beaufschlagt. Stromaufwärts der Austauschfläche ist eine Verteileinrichtung für die Flüssigkeit vorgesehen. Mit Hilfe der Flüssigkeit wird die Austauschfläche beaufschlagt. Auf diese Weise will man insbesondere in einer als Absorber ausgebildeten Einrichtung eine Entfeuchtung eines Gases durch eine die Feuchtigkeit aufnehmende Flüssigkeit erreichen.

Tatsächlich geschieht die Entfeuchtung der Luft auf Basis einer hygroskopischen wässrigen Salzlösung, die mit der zugeführten Luft in Kontakt gebracht wird. Der Absorber stellt in diesem Zusammenhang eine möglichst große spezifische Austauschfläche zur Verfügung, um eine effiziente Stoff- und Wärmeübertragung zwischen der Luft und der wässrigen Salzlösung zu gewährleisten. Die bekannte Vorgehensweise mag sich für das Entfeuchten von Luft bewährt haben, setzt jedoch den Einsatz und die Zufuhr einer wässrigen Salzlösung voraus.

Daneben beschreibt die DE 197 52 709 A1 einen Abgaswandler, welcher Abgasverluste bei herkömmlichen Feuerungsanlagen verringern soll. Hier geht es insgesamt darum, aus heißem und feuchten Kesselabgas unter Wärmerückgewinnung lauwarmes und trockenes Kaminabgas zu produzieren, um insbesondere ein Auskondensieren im Kamin zu verhindern. Dazu wird das ursprüngliche Verbrennungsabgas bzw. Kesselabgas nach der möglichst weitgehenden Abgabe seines Wärmeinhaltes durch Wärmetausch mit Umluft oder Frischluft in einem Luftkondensationskühler noch weiter heruntergekühlt und dadurch entfeuchtet. Anschließend wird ein Teil dieser vorgewärmten Luft als Fremdluft zum sogenannten Kaminabgas vermischt, wobei insgesamt eine Wasserkondensation im Inneren des Kamins ausgeschlossen werden soll. Der hiermit verbundene konstruktive Aufwand durch unter anderem den zusätzlichen Kondensationskühler ist jedoch groß, so dass sich entsprechende Anlagen in der Praxis bisher nicht haben durchsetzen können.

Ein gattungsgemäßes Verfahren und eine entsprechende Vorrichtung werden in der EP 2 026 029 A1 beschrieben. Hier geht es um einen Wärmetauscher, der mit einer hydrophilen porösen Polymerschicht ausgerüstet ist. Die fragliche Schicht kann grundsätzlich auch als textiler flächiger Träger ausgebildet sein. Zur Beabstandung der Schichten sind Abstandhalter vorgesehen.

Ähnlich geht die ebenfalls gattungsbildende GB 2 417 315 A vor, die sich ebenfalls mit Wärmeaustauschelementen mit zusätzlichen Abstandshaltern beschäftigt. Auch in diesem Fall kommt es zu einem Wärme- und Feuchteübertrag.

Der Erfindung liegt das technische Problem zugrunde, ein derartiges Verfahren zur gleichzeitigen Übertragung von Wärme und Feuchte zwischen wenigstens zwei unterschiedlichen Gasströmen und eine zusätzliche Vorrichtung so weiter zu entwickeln, dass ein möglichst effizienter Wärme- und Feuchteübertrag bei zugleich konstruktiv und verfahrensmäßig einfacher Auslegung erreicht wird.

Zur Lösung dieser technischen Problemstellung ist ein gattungsgemäßes Verfahren zur gleichzeitigen Übertragung von Wärme und Feuchte zwischen wenigstens zwei unterschiedlichen Gasströmen im Rahmen der Erfindung dadurch gekennzeichnet, dass der mit dem Füllstoff beschichtete flächige Träger dreidimensional geformt wird.

Im Rahmen der Erfindung findet also neben dem gleichsam durchweg ablaufenden und dem Temperaturgradienten zwischen den beiden unterschiedlichen Gasströmen folgenden Wärmeübertrag zusätzlich noch der Feuchteübertrag statt. Dabei wird die in dem einen Gasstrom befindliche Feuchte dem Feuchtegradienten bzw. Konzentrationsgradienten der Feuchte folgend auf den anderen Gasstrom übertragen. Dazu weist die textile Austauschfläche den flächigen und erfindungsgemäß dreidimensional geformten Träger auf, welcher mit dem wasserbindenden Füllstoff beschichtet wird.

Im Rahmen der Erfindung kommt es also ausdrücklich zu einem gleichzeitigen Wärme- und Feuchteübertrag zwischen den beiden unterschiedlichen Gasströmen. Die Gasströme können dabei prinzipiell von jedweder technischer Einrichtung stammen bzw. zu dieser hinführen. Entscheidend ist, dass die beiden Gasströme im Regelfall sowohl über eine unterschiedliche Temperatur als auch einen unterschiedlichen Feuchtegehalt verfügen. Dadurch liegt zwischen den beiden Gasströmen der zuvor bereits angesprochene Temperaturgradient und auch der Feuchtegradient vor. Beide Gradienten sorgen für den gewünschten Übertrag von Wärme und Feuchte.

Dabei geht die Erfindung ergänzend davon aus, dass die inhärente Feuchte des einen Gasstromes, also der in dem betreffenden Gasstrom ohnehin vorhandene Feuchtegehalt vorteilhaft genutzt werden kann, um den anderen (üblicherweise trockenen) Gasstrom zu befeuchten. D.h., im Rahmen der Erfindung erfolgt ausdrücklich keine zusätzliche Feuchtezufuhr oder Feuchteabfuhr, sondern erfolgt lediglich ein Feuchteaustausch zwischen den beiden Gasströmen, und zwar dem Feuchtegradienten folgend.

Die zwischen den beiden Gasströmen befindliche textile Austauschfläche ist zu diesem Zweck als flächiger Träger ausgelegt, welcher mit einem wasserbindenden Füllstoff beschichtet wird. Der wasserbindende Füllstoff nimmt die Feuchte des einen Gasstromes auf und gibt diese aufgrund des durchlässigen Charakters der textilen Austauschfläche an den anderen Gasstrom gemäß dem Feuchtegradienten ab. Dabei kann durch die Auslegung des wasserbindenden Füllstoffes grundsätzlich die Diffusionsgeschwindigkeit der Feuchte durch die solchermaßen realisierte Membran gesteuert werden.

Tatsächlich hat es sich in diesem Zusammenhang bewährt, wenn der flächige Träger als textiles Flächengebilde aus einem Filz und/oder Vlies und/oder Gewebe und/oder Gewirke ausgebildet ist. Die Beschichtung des flächigen Trägers mit dem wasserbindenden Füllstoff erfolgt dabei regelmäßig derart, dass der Füllstoff als Suspension und insbesondere Wassersuspension auf den Träger aufgebracht wird. Hier hat es sich besonders bewährt, wenn der flächige Träger durch ein Tauchbad geführt und mit dem Füllstoff beschichtet wird. Bei dem Tauchbad handelt es sich folglich um die fragliche Wassersuspension, also das Stoffgemisch aus Wasser und dem darin fein verteilten Füllstoff, welcher auf diese Weise das textile Flächengebilde wunschgemäß beschichtet.

Der Füllstoff selbst setzt sich im Allgemeinen aus einem hygroskopischen Füllmaterial sowie einem Binder zusammen. Mit Hilfe des hygroskopischen Füllmaterials wird die Feuchte in dem einen Gasstrom gebunden und kann an den anderen demgegenüber trockeneren Gasstrom entsprechend abgegeben werden. Der Binder sorgt in diesem Zusammenhang dafür, dass das Füllmaterial an dem flächigen Träger haftet und eröffnet zugleich die Möglichkeit, den auf diese Weise gebildeten und mit dem wasserbindenden Füllstoff beschichteten flächigen Träger in praktisch jede denkbare dreidimensionale Form bringen zu können.

Zu diesem Zweck kommen als Binder typischerweise Adhäsivmittel auf Kunststoffbasis wie Acrylate oder andere Kunststoffadhäsivmittel zum Einsatz. In Verbindung mit den verwendeten Füllmaterialien sorgt dieser Binder insgesamt dafür, dass der mit dem Füllstoff beschichtete Träger grundsätzlich in jedwede dreidimensionale Form gebracht werden kann. Dabei eröffnet der Rückgriff auf Kunststoffadhäsivmittel wie Acrylate die weitere Option, an dieser Stelle bekannte Kunststoffverformungsverfahren, wie beispielsweise ein Tiefziehen, nutzen zu können.

Bei den hygroskopischen Füllmaterialien bestehen vielfältige Auswahlmöglichkeiten. So können als Füllmaterialien anorganische Mineralstoffe wie Aluminiumsilikate oder auch Gerüstsilikate zum Einsatz kommen. In diesem Zusammenhang empfiehlt die Erfindung beispielsweise den Einsatz von Bimsstein, Bentonit, Zeolith usw.. Alternativ oder zusätzlich lassen sich als hygroskopische Füllmaterialien aber auch anorganische Salze wie beispielsweise Lithiumchlorid, Natriumkarbonat etc. nutzen. Zusätzlich oder alternativ empfiehlt die Erfindung auch den Einsatz organischer Absorber oder vergleichbarer hygroskopischer Materialien wie beispielsweise die Verwendung sogenannter Superabsorber, also von Kunststoffen, die bei der Aufnahme von Flüssigkeiten aufquellen und ein Hydrogel bilden. An dieser Stelle kommen überwiegend Copolymere aus Acrylsäure und Natriumacrylat zum Einsatz, beispielsweise Polyanilin.

Jedenfalls ist der jeweils zum Einsatz kommende hygroskopische Füllstoff bzw. das Wasser speichernde und Wasser abgebende Füllmaterial in Verbindung mit dem Binder in der Lage, die überschüssige Feuchte des einen Gasstromes aufzunehmen und an den anderen demgegenüber trockeneren Gasstrom abgeben zu können. Hierfür sorgt die insgesamt porös ausgelegte textile Austauschfläche, über welche die beiden unterschiedlichen Gasströme miteinander kommunizieren.
Damit der Füllstoff in Verbindung mit dem Binder einwandfrei als Wassersuspension auf den flächigen Träger zur Beschichtung aufgebracht werden kann, liegt der Füllstoff typischerweise in granularer oder pulvriger Form vor und wird dann mit Wasser zu der bereits angesprochenen Suspension bzw. Wassersuspension gemischt. Hier haben sich Granalien mit einem Durchmesser von in etwa 500 µm im Maximum oder entsprechende Pulver mit einer Pulverfeinheit von 100 µm und weniger als besonders günstig erwiesen. Außerdem können dem solchermaßen ausgelegten Füllstoff zusätzlich Additive zugefügt werden, die ebenfalls in granularer oder pulvriger Form unter Berücksichtigung der zuvor angegebenen Körnung zugegeben werden. Bei den fraglichen Additiven kann es sich um Tenside zur Herabsetzung der Oberflächenspannung des Wassers und folglich Verbesserung der Benetzung des Trägers, Pigmente beispielsweise zur Farbgebung, aber auch um antibakterielle Zusätze handeln. Im Falle antibakterieller Zusätze haben sich Biozide oder auch Silberverbindungen als besonders günstig erwiesen, die wirksam etwaiges bakterielles Wachstum auf der fraglichen textilen Austauschfläche wirksam verhindern.

Der mit dem Füllstoff beschichtete flächige Träger weist typischerweise ein Flächengewicht zwischen 20 g/m² und 400 g/m² auf. Bevorzugt ist ein Flächengewicht zwischen ca. 50 g/m² bis 150 g/m² und ganz besonders bevorzugt von ca. 50 g/m² bis 90 g/m². Auf diese Weise kann der mit dem Füllstoff beschichtete flächige Träger und die solchermaßen realisierte Membran unschwer in beispielsweise einen Wärmetauscher eingebaut oder mit diesem kombiniert werden. Tatsächlich hat es sich nämlich bewährt, wenn der Gasstrom einerseits als Abgasstrom, beispielsweise einer Wärmequelle und insbesondere einer häuslichen Wärmequelle und andererseits als Zuluftstrom zur Raumbeheizung ausgelegt ist. Bei der Wärmequelle und insbesondere häuslichen Wärmequelle handelt es sich bevorzugt um eine sogenannte Therme bzw. eine Heizungsanlage, die beispielsweise zur Geschossbeheizung von Wohneinheiten eingesetzt wird. In der Regel wird eine solche Therme mit Gas bzw. Erdgas betrieben. Oft werden solche Thermen auch als Kombithermen zur Verfügung gestellt, die vorrangig Warmwasser im Durchlaufprinzip liefern und zusätzlich im Heizbetrieb arbeiten können.

Jedenfalls zeichnen sich solche Thermen typischerweise dadurch aus, dass der von ihnen erzeugte Abgasstrom einen relativ hohen Feuchtegehalt aufweist, welcher unter anderem dazu korrespondiert, dass der Wasserdampftaupunkt im Rauchgas bei der Verbrennung von Erdgas bei lediglich ca. 60 °C liegt. Das lässt sich im Kern darauf zurückführen, dass bei der Verbrennung von im Erdgas hauptsächlich befindlichen Methan eine große Menge an Wasserdampf durch die Oxidation der Wasserstoffatome des Methans entsteht. Dieser hohe Feuchtegehalt von nahezu 100% relativer Feuchte führt oftmals zu der auch im Rahmen des Standes der Technik nach der DE 197 52 709 A1 bereits beschriebenen Versottung von Schornsteinen und Kaminen. Dem versucht man in der Praxis durch zusätzlich eingezogene Kaminrohre aus beispielsweise Polypropylen oder Edelstahl zu begegnen.

Erfindungsgemäß wird nun der feuchte Abgasstrom einer solchen Wärmequelle und meist häuslichen Wärmequelle und insbesondere einer Therme dazu genutzt, die Zuluft für die Raumbeheizung zu befeuchten. Tatsächlich ist die Zuluft meistens trocken, verfügt jedenfalls nicht über die für das allgemeine menschliche Wohlbefinden erforderliche relative Feuchte von ca. 40% bis 60%. Um diese trockene Zuluft anzufeuchten, kommt das erfindungsgemäße Verfahren mit der speziellen Membran zum Einsatz und sorgt dafür, dass der feuchte Abgasstrom der Therme im Beispielfall entfeuchtet und zugleich die trockene Zuluft angefeuchtet werden.

Auf diese Weise wird die im Abgasstrom inhärent vorhandene Feuchtigkeit, nämlich primär hervorgerufen durch die Verbrennung von Erdgas bzw. Methan, vorteilhaft zur Befeuchtung von Zuluft genutzt. Das kann selbstverständlich sowohl bei technischen Prozessen genutzt werden, als auch für die Klimatisierung von Wohnräumen.

Außerdem nutzt die Erfindung die Tatsache, dass es sich bei dem im Abgasstrom der Therme im Beispielfall vorhandenen Wasser um entsalztes Wasser handelt, also solches Wasser, welches destilliertem Wasser nahe kommt. Das lässt sich darauf zurückführen, dass das Wasser dem bereits beschriebenen Oxidationsprozess des Erdgases bzw. Methans entstammt und folglich prozessbedingt keine oder praktisch keine darin enthaltenen Salze aufweist. D.h., aufwendige Aufbereitungsmaßnahmen zur Entsalzung von beispielsweise Wasser im Zuge der Befeuchtung von Zuluft können ausdrücklich entfallen.

Dadurch wird die sonst obligatorische Vollentsalzung des üblicherweise zur Luftbefeuchtung verwendeten Leitungswassers eingespart.

Hinzu kommt, dass zwischen den beiden Gasströmen ein Feuchte- und Wärmeübertrag stattfindet, und zwar bei gleichzeitig vollständiger Trennung der beiden Gasströme bzw. der Zuluft von der Abluft. Diese vollständige Trennung lässt sich darauf zurückführen, dass der erfindungsgemäß eingesetzte und mit dem wasserbindenden Füllstoff beschichtete Träger für die Gasbestandteile des Abgases nicht durchlässig ist bzw. entsprechend eingestellt werden kann. Lediglich die beschriebene und im Abgasstrom befindliche Kondensatfeuchte ist in der Lage, durch die solchermaßen realisierte Membran bzw. die realisierte textile Austauschfläche hindurch diffundieren zu können.

Insgesamt wird eine deutliche Effizienzsteigerung beobachtet und auch die signifikante Reduktion von Produktionskosten. Auch der Materialeinsatz lässt sich verringern, weil im Regelfall der zusätzliche Einzug von Rohren in den Kamin wie beim Stand der Technik entfallen kann. Mit Hilfe zusätzlicher Ventilatoren, beispielsweise eines Zuluftventilators und/oder Abluft- bzw. Abgasventilators lassen sich die Strömungsgeschwindigkeiten der einzelnen Gasströme bei Bedarf noch erhöhen und die Effizienz steigern.

Durch den Rückgriff auf die entsprechend ausgelegte textile Austauschfläche bzw. den flächigen Träger mit dem beschichteten wasserbindenden Füllstoff wird eine hohe Langzeitstabilität beobachtet, weil für die beiden Gasströme im beschriebenen Beispielfall der Therme bzw. Gastherme Temperaturen von nicht mehr als ca. 130 °C beobachtet werden, die von den entsprechenden Materialien problemlos zu beherrschen sind. Das gilt insbesondere für den Fall, dass der flächige Träger aus beispielsweise Polyesterfäden hergestellt wird. In jedem Fall sorgt die textile Austauschfläche typischerweise dafür, dass der feuchte Gasstrom bzw. Abgasstrom im Bereich der textilen Austauschfläche den Taupunkt unterschreitet. Das lässt sich durch die gleichzeitige Wärmeübertragung erklären.

Auf diese Weise schlägt sich das Kondensat in dem einen Gasstrom bzw. Abgasstrom an der textilen Austauschfläche nieder und wird von dem wasserbindenden Füllstoff aufgenommen. Da die auf diese Weise realisierte Membran insgesamt durchlässig gestaltet ist, kann die niedergeschlagene Feuchtigkeit durch die textile Austauschfläche hindurch zur gegenüberliegenden Seite diffundieren und trifft dort auf den demgegenüber trockeneren anderen Gasstrom bzw. den Zuluftstrom im Beispielfall.

Der flächige Träger lässt sich einfach oder mehrfach mit dem wasserbindenden Füllstoff beschichten. Dadurch lässt sich die Schichtdicke variieren. Auf diese Weise besteht erfindungsgemäß die Möglichkeit, die Porosität der solchermaßen realisierten Membran variieren zu können. Dadurch lassen sich Feuchtedurchgangsraten für die fragliche Membran ebenso wie eventuelle Gasdurchgangsraten festlegen. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: eine erfindungsgemäße Vorrichtung in einer Übersicht und
- Fig. 2: einen Wärmetauscher inklusive der erfindungsgemäß realisierten Membran in Aufsicht aus Richtung X in der Fig. 1.

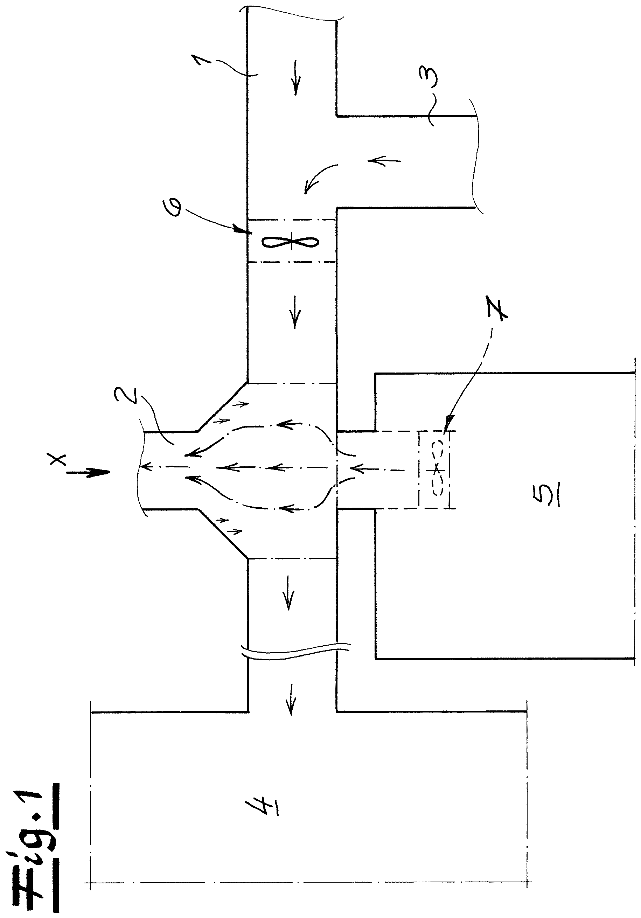

In den Figuren ist eine Vorrichtung zur gleichzeitigen Übertragung von Wärme und Feuchte zwischen wenigstens zwei unterschiedlichen Gasströmen 1, 2 dargestellt. Bei den beiden Gasströmen 1, 2 handelt es sich einerseits um einen Zuluftstrom 1 und andererseits einen Abgasstrom 2. Im Ausführungsbeispiel nach der Fig. 1 ist dem Zuluftstrom 1 zusätzlich noch ein Umluftstrom 3 zugemischt, was jedoch nicht zwingend ist und nur beispielhaft gilt. Mit Hilfe des Zuluftstromes 1 und ggf. des Umluftstromes 3 wird ein lediglich schematisch angedeuteter Wohnraum 4 wenigstens teilweise beheizt.

Tatsächlich ist zur Beheizung bzw. Bereitstellung von Warmwasser zusätzlich noch eine sogenannte Therme bzw. ein Brennwertkessel 5 vorgesehen. Im Ausführungsbeispiel handelt es sich bei der Therme bzw. dem Brennwertkessel 5 um eine sogenannte Gastherme, also eine solche, die mit Erdgas betrieben wird. Bei der Verbrennung des Erdgases wird hauptsächlich Methan oxidiert, so dass der die Therme 5 verlassene Abgasstrom 2 einen hohen Feuchtegehalt an Wasser aufweist.

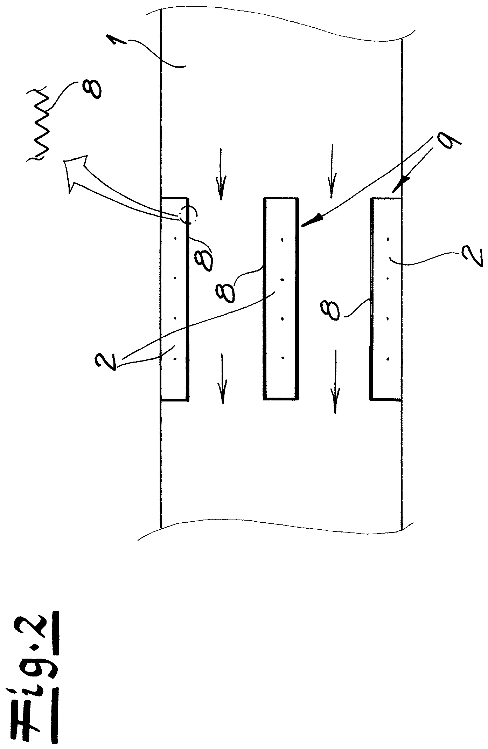

Im Ausführungsbeispiel und entsprechend der Darstellung in der Fig. 2 erkennt man, dass der Abgasstrom 2 und der Zuluftstrom 1 senkrecht zu einander geführt werden. Tatsächlich mag an dieser Stelle ein Wärmetauscher 9 zum Einsatz kommen, welcher in der Fig. 2 lediglich schematisch angedeutet ist und über einzelne senkrecht im Schnitt dargestellte Kanäle für den Abgasstrom 2 verfügt, zwischen denen der Zuluftstrom 1 in der Zeichenebene der Fig. 2 hindurchgeführt wird, um so die im Abgasstrom 2 befindliche Wärme auf den Zuluftstrom 1 zu übertragen.

Lediglich angedeutete Ventilatoren 6, 7, einerseits ein Zuluftventilator 6 und andererseits ein Abluftventilator 7, sorgen dafür, dass die erforderlichen Strömungsgeschwindigkeiten in einerseits dem Zuluftstrom 1 und andererseits dem Abluftstrom 2 beobachtet werden. Die beiden Ventilatoren 6, 7 sind selbstverständlich entbehrlich.

Von besonderer Bedeutung ist nun der Umstand, dass die beiden Gasströme 1, 2 über wenigstens eine textile Austauschfläche 8 miteinander kommunizieren. Die textile Austauschfläche 8 mag im Ausführungsbeispiel einen Teil der Wandung des jeweiligen Kanals für den Abgasstrom 2 darstellen, respektive definieren. Anstelle der Therme 5 im Beispielfall können selbstverständlich auch andere Heizanlagen, Blockheizkraftwerke, Holzöfen, Holzvergaseröfen, ÖIbrenner, Gasbrenner usw. zum Einsatz kommen. Außerdem ist die beschriebene Anlage selbstverständlich nicht auf den Einsatz zur Wohnraumbeheizung beschränkt, sondern kann selbstverständlich auch in Verbindung mit Industrieanlagen eingesetzt werden.

Man erkennt, dass die textile Austauschfläche 8 als jeweils Membranfläche 8 eines insgesamt realisierten Luft/Luft-Wärmetauschers 9 ausgebildet ist. Tatsächlich sorgt der Luft/Luft-Wärmetauscher 9 im dargestellten Beispielfall dafür, dass sowohl ein Wärmeübertrag von dem Abgasstrom 2 auf den Zuluftstrom 1 als auch ein Feuchtübertrag vom Abgasstrom 2 auf den Zuluftstrom 1 erfolgt. Das geschieht gleichzeitig, und zwar jeweils dem Temperaturgradienten bzw. Feuchtegradienten folgend.

Die textile Austauschfläche bzw. Membran 8 ist erfindungsgemäß so aufgebaut, dass an dieser Stelle ein flächiger Träger aus beispielsweise einem Vlies zum Einsatz kommt. Das Vlies mag durch die Verwirbelung und ggf. gegenseitige Fixierung von Polyesterfäden hergestellt sein. Das betreffende Vlies wird anschließend mit einem wasserbindenden Füllstoff beschichtet.

Zu diesem Zweck wird das Vlies bzw. eine entsprechende längserstreckte Vliesbahn durch ein Tauchbad geführt. Bei dem Tauchbad handelt es sich um eine Wassersuspension eines Füllstoffes. D.h., der Füllstoff befindet sich als jeweils Schwebeteilchen im Wasser und wird auf diese Weise auf das Vlies durch Tauchbeschichten aufgebracht. Der Füllstoff selbst setzt sich im Wesentlichen aus einem oder mehreren Füllmaterialien sowie einem Binder zusammen. Für das Tauchbad beobachtet man beispielhaft eine Zusammensetzung von in etwa 30 Gew.-% bis 50 Gew.-% Wasser sowie 30 Gew.-% bis 50 Gew.-% Füllstoff. Zusätzlich mag noch 10 Gew.-% bis 20 Gew.-% Binder zugegeben werden.

Der Füllstoff liegt ebenso wie der Binder und ggf. weitere Additive in granularer bzw. pulverförmiger Form vor, damit die beschriebene Tauchbeschichtung gelingt. Tatsächlich haben sich an dieser Stelle Granulatkörner mit einem Durchmesser von nicht mehr als 500 µm als besonders günstig erwiesen bzw. Pulver mit einer Feinheit von weniger als 100 µm. Auf diese Weise legt sich der Füllstoff als Beschichtung beidseitig sowohl an die Oberseite als auch an die Unterseite des textilen Flächengebildes bzw. Vlieses in dem beschriebenen Tauchgang. Dadurch kann letztlich die Dicke der Beschichtung vorgegeben und gewählt werden. Außerdem ist es selbstverständlich möglich, den fraglichen flächigen Träger bzw. das Vlies mehrfach zu beschichten. Auf diese Weise können sowohl Gasdurchgangsraten wie auch Feuchtedurchgangsraten für die solchermaßen gebildete Membran 8 variiert und an die Gegebenheiten angepasst werden.

Tatsächlich kommt es nämlich im Rahmen der Erfindung darauf an, dass die fragliche Membran 8 für die eventuell im Abgasstrom 2 befindlichen Gase respektive Abgase undurchlässig ist, diese also nicht in den Zuluftstrom 1 eintreten können. Demgegenüber gelingt es der im Abgasstrom 2 befindlichen Feuchte, durch die fragliche Membran 8 hindurch zu diffundieren und somit den Zuluftstrom 1 zu befeuchten. Durch den Rückgriff auf einen Kunststoffbinder bzw. ein Adhäsivmittel wie beispielsweise Acrylat im Füllstoff besteht zusätzlich die Möglichkeit, die Membran 8 zu strukturieren, auch dreidimensional, wie dies in vergrößerter Darstellung in der Fig. 2 angedeutet ist. Dadurch wird insgesamt die Oberfläche der Membran 8 vergrößert und kann somit der Feuchteübertrag optimiert werden. Tatsächlich weist die Membran 8 im Beispielfall ein im Querschnitt zickzackförmiges Profil auf. Außerdem haben Messungen ergeben, dass die Membran 8 Druckunterschiede zwischen den beiden Gasströmen 1, 2 von mehr als 2.000 Pa zulässt, ohne dass es zu einem Druckausgleich kommt. Dadurch besteht keine Gefahr, dass etwaige Abgase aus dem Abgasstrom 2 in den Zuluftstrom 1 übertragen werden und übergehen. Vielmehr ist die fragliche Membran 8 lediglich für den beschriebenen Feuchteübertrag durchlässig.

Die Formung der Membran 8 kann durch Tiefziehen oder dergleichen Kunststoffverformungstechnik erfolgen. Dazu mag der beschichtete Träger auf Temperaturen von z.B. 140 °C bis 240 °C erwärmt werden. Bei diesen Temperaturen werden der Binder und der Träger verformbar.

## Patentansprüche

1. Verfahren zur gleichzeitigen Übertragung von Wärme und Feuchte zwischen wenigstens zwei unterschiedlichen Gasströmen (1, 2), wobei die beiden Gasströme (1, 2) über wenigstens eine textile Austauschfläche (8) miteinander kommunizieren, und wobei die in dem einen Gasstrom (2) befindliche Feuchte dem Feuchtegradienten folgend auf den anderen Gasstrom (1) übertragen wird und dazu die textile Austauschfläche (8) einen flächigen Träger aufweist, welcher mit einem wasserbindenden Füllstoff beschichtet wird, **dadurch gekennzeichnet, dass** der mit dem Füllstoff beschichtete flächige Träger dreidimensional geformt wird.

2. Verfahren nach Anspruch 1, **dadurch gekennzeichnet, dass** der flächige Träger als textiles Flächengebilde aus einem Filz und/oder Vlies und/oder Gewebe und/oder Gewirke aus insbesondere Polyesterfasern bzw. Polyesterfäden ausgebildet ist.

3. Verfahren nach Anspruch 1 oder 2, **dadurch gekennzeichnet, dass** der Füllstoff als Suspension, insbesondere Wassersuspension, auf den flächigen Träger aufgebracht wird.

4. Verfahren nach Anspruch 3, **dadurch gekennzeichnet, dass** der Träger durch ein Tauchbad geführt und mit dem Füllstoff beschichtet wird.

5. Verfahren nach Anspruch 4, **dadurch gekennzeichnet, dass** der mit dem Füllstoff beschichtete Träger beispielsweise mit Heißluft getrocknet wird.

6. Verfahren nach einem der Ansprüche 1 bis 5, **dadurch gekennzeichnet, dass** sich der Füllstoff im Wesentlichen aus einem hygroskopischen Füllmaterial sowie einem Binder zusammensetzt.

7. Verfahren nach Anspruch 6, **dadurch gekennzeichnet, dass** als Füllmaterial anorganische Mineralstoffe wie Aluminiumsilikate, Gerüstsilikate und/oder anorganische Salze wie Lithiumchlorid und/oder organische Absorber wie Polyanilin zum Einsatz kommen.

8. Verfahren nach Anspruch 6 oder 7, **dadurch gekennzeichnet, dass** als Binder Adhäsivmittel auf Kunststoffbasis, wie beispielsweise Acrylate, eingesetzt werden.

9. Verfahren nach einem der Ansprüche 1 bis 8, **dadurch gekennzeichnet, dass** der Füllstoff in granularer oder pulvriger Form mit Wasser zu einer Suspension gemischt wird.

10. Verfahren nach einem der Ansprüche 1 bis 9, **dadurch gekennzeichnet, dass** dem Füllstoff zusätzlich Additive, wie Tenside oder Pigmente, aber auch antibakterielle Zusätze, wie Biozide, Silberverbindungen etc., zugesetzt werden.

11. Verfahren nach einem der Ansprüche 1 bis 10, **dadurch gekennzeichnet, dass** der mit dem Füllstoff beschichtete flächige Träger ein Flächengewicht zwischen 20 g/m² und 400 g/m², vorzugsweise zwischen 50 g/m² bis 150 g/m² und besonders bevorzugt zwischen 50 g/m² bis 90 g/m² aufweist.

12. Verfahren nach einem der Ansprüche 1 bis 11, **dadurch gekennzeichnet, dass** der flächige Träger unter Rückgriff auf Kunststoffverformungsverfahren dreidimensional geformt wird.

13. Verfahren nach einem der Ansprüche 1 bis 12, **dadurch gekennzeichnet, dass** als Gasstrom (2) einerseits ein Abgasstrom (2) beispielsweise einer Wärmequelle und andererseits ein Zuluftstrom (1) zur Raumbeheizung zum Einsatz kommen.

14. Vorrichtung zur gleichzeitigen Übertragung von Wärme und Feuchte zwischen wenigstens zwei unterschiedlichen Gasströmen (1, 2), wobei die beiden Gasströme (1, 2) über wenigstens eine textile Austauschfläche (8) miteinander kommunizieren, und wobei die in dem einen Gasstrom (2) befindliche Feuchte dem Feuchtegradienten folgend auf den anderen Gasstrom (1) übertragen wird und dazu die textile Austauschfläche (8) einen flächigen Träger aufweist, welcher mit einem wasserbindenden Füllstoff beschichtet ist, **dadurch gekennzeichnet, dass** der mit dem Füllstoff beschichtete flächige Träger dreidimensional geformt ist.

15. Vorrichtung nach Anspruch 14, **dadurch gekennzeichnet, dass** die textile Austauschfläche (8) als jeweils Membranfläche (8) in einem Luft/Luft-Wärmetauscher (9) ausgebildet ist.

## Claims

1. A method for the simultaneous transfer of heat and moisture between at least two different gas flows (1, 2), wherein the two gas flows (1, 2) communicate with one another via at least one textile exchange area (8) and wherein the moisture located in the one gas flow (2) is transferred to the other gas flow (1) following the moisture gradient and the textile exchange area (8) has a planar carrier for this purpose which is coated with a water-binding filling material, **characterized in that** the planar carrier coated with the filling material has a three-dimensional form.

2. The method according to claim 1, **characterized in that** the planar carrier is configured as a textile sheet material made of a felt and/or non-woven fabric and/or woven fabric and/or knitted fabric, in particular made of polyester fibres or polyester threads.

3. The method according to claim 1 or 2, **characterized in that** the filling material is applied as a suspension, in particular an aqueous suspension, to the planar carrier.

4. The method according to claim 3, **characterized in that** the carrier is guided through an immersion bath and coated with the filling material.

5. The method according to claim 4, **characterized in that** the carrier coated with the filling material is dried using hot air, for example.

6. The method according to one of claims 1 to 5, **characterized in that** the filling material is substantially made up of a hygroscopic filling material and also a binder.

7. The method according to claim 6, **characterized in that** inorganic mineral substances such as aluminium silicates, tectosilicates and/or inorganic salts such as lithium chloride and/or organic absorbers such as polyaniline are used as the filling material.

8. The method according to claim 6 or 7, **characterized in that** plastic-based adhesive agents such as acrylates, for example, are used as the binder.

9. The method according to one of claims 1 to 8, **characterized in that** the filling material is mixed in granular or powder form with water into a suspension.

10. The method according to one of claims 1 to 9, **characterized in that** additives such as surfactants or pigments, but also antibacterial additives such as biocides, silver compounds, etc. are added to the filling material in addition.

11. The method according to one of claims 1 to 10, **characterized in that** the planar carrier coated with the filling material has a surface weight of between 20 g/m2 and 400 g/m2, preferably between 50 g/m2 to 150 g/m2 and particularly preferably between 50 g/m2 to 90 g/m2.

12. The method according to one of claims 1 to 11, **characterized in that** the planar carrier is formed three-dimensionally with the assistance of plastic deformation methods.

13. The method according to one of claims 1 to 12, **characterized in that** as the gas flow (2), on the one hand, an exhaust gas flow (2), for example of a heat source, and, on the other hand, an incoming air flow (1) are used for space heating.

14. A device for the simultaneous transfer of heat and moisture between at least two different gas flows (1, 2), wherein the two gas flows (1, 2) communicate with one another via at least one textile exchange area (8) and wherein the moisture located in the one gas flow (2) is transferred to the other gas flow (1) following the moisture gradient and the textile exchange area (8) has a planar carrier for this purpose which is coated with a water-binding filling material, **characterized in that** the planar carrier coated with the filling material has a three-dimensional form.

15. The device according to claim 14, **characterized in that** the textile exchange area (8) is configured as a membrane area (8) in each case in an air/air-heat exchanger (9).

## Revendications

1. Procédé pour la transmission simultanée de chaleur et d'humidité entre au moins deux flux de gaz différents (1, 2), les deux flux de gaz (1, 2) communiquant entre eux par au moins une surface d'échange textile (8) et l'humidité se trouvant dans un flux de gaz (2) étant transmise à l'autre flux de gaz (1) d'après le gradient d'humidité et la surface d'échange textile (8) comportant à cet effet un support plan, lequel est revêtu d'une substance de remplissage fixant l'eau, **caractérisé en ce que** le support plan revêtu de la substance de remplissage est formé de manière tridimensionnelle.

2. Procédé selon la revendication 1, **caractérisé en ce que** le support plan est constitué sous la forme d'une structure de surface textile composée d'un feutre et/ou voile et/ou tissu et/ou tricot notamment de fibres ou fils de polyester.

3. Procédé selon la revendication 1 ou 2, **caractérisé en ce que** la substance de remplissage est appliquée au support plan sous la forme d'une suspension, notamment d'une suspension aqueuse.

4. Procédé selon la revendication 3, **caractérisé en ce que** le support est passé par un bain de trempage et est revêtu de la substance de remplissage.

5. Procédé selon la revendication 4, **caractérisé en ce que** le support revêtu de la substance de remplissage est séché par exemple avec de l'air chaud.

6. Procédé selon l'une quelconque des revendications 1 à 5, **caractérisé en ce que** la substance de remplissage est composée pour l'essentiel d'un matériau de remplissage hygroscopique ainsi que d'un liant.

7. Procédé selon la revendication 6, **caractérisé en ce que** des matières minérales anorganiques comme les silicates d'aluminium, les tectosilicates et/ou sels minéraux comme le chlorure de lithium et/ou des absorbeurs organiques comme la polyaniline sont utilisées comme matériau de remplissage.

8. Procédé selon la revendication 6 ou 7, **caractérisé en ce que** des adhésifs à base de matière plastique, comme par exemple les acrylates, sont utilisés en tant que liants.

9. Procédé selon l'une quelconque des revendications 1 à 8, **caractérisé en ce que** la substance de remplissage sous forme granulaire ou pulvérulente est mélangée à de l'eau en une suspension.

10. Procédé selon l'une quelconque des revendications 1 à 9, **caractérisé en ce que** des additifs comme des agents tensioactifs ou pigments, mais également des additifs antibactériens, comme les biocides, composés d'argent, etc, sont en plus ajoutés à la substance de remplissage.

11. Procédé selon l'une quelconque des revendications 1 à 10, **caractérisé en ce que** le support plan revêtu de la substance de remplissage comporte un grammage situé entre 20 g/m² et 400 g/m², de préférence entre 50 g/m² à 150 g/m² et notamment de préférence entre 50 g/m² à 90 g/m².

12. Procédé selon l'une quelconque des revendications 1 à 11, **caractérisé en ce que** le support plan est formé de manière tridimensionnelle en ayant recours à un procédé de déformation de matière plastique.

13. Procédé selon l'une quelconque des revendications 1 à 12, **caractérisé en ce que** d'une part, un flux de gaz d'échappement (2), par exemple d'une source de chaleur, et d'autre part, un flux d'apport d'air (1) sont utilisés en tant que flux de gaz (2) pour le chauffage de l'espace.

14. Dispositif pour la transmission simultanée de chaleur et d'humidité entre au moins deux flux de gaz différents (1, 2), les deux flux de gaz (1, 2) communiquant entre eux par au moins une surface d'échange textile (8) et l'humidité se trouvant dans un flux de gaz (2) étant transmise à l'autre flux de gaz (1) d'après le gradient d'humidité et la surface d'échange textile (8) comportant à cet effet un support plan, lequel est revêtu d'une substance de remplissage fixant l'eau, **caractérisé en ce que** le support plan revêtu de la substance de remplissage est formé de manière tridimensionnelle.

15. Dispositif selon la revendication 14, **caractérisé en ce que** la surface d'échange textile (8) est constituée respectivement comme une surface de membrane (8) dans un échangeur de chaleur air-air (9).
